# EUROPEAN PATENT APPLICATION

(11) **EP 4 510 768 A1**
(43) Date of publication of application: **19.02.2025**
(21) Application number: 23788044.8
(22) Date of filing: 27.02.2023
(51) Int. Cl.: H04W 76/20, H04W 76/15, H04W 84/12

(54) **COMMUNICATION DEVICE AND CONTROL METHOD FOR SAME**

(30) Priority: 15.04.2022 JP 2022067820
(71) Applicant: CANON KABUSHIKI KAISHA, Tokyo 146-8501 (JP)
(72) Inventor: IKEDA, Nobuhiro, Tokyo 146-8501 (JP)
(74) Representative: Canon Europe Limited
(86) International application number: PCT/JP2023/006991
(87) International publication number: WO 2023/199622

(57) **Abstract**

A communication device that performs wireless communication, comprises notification means for notifying a counterpart communication device of mode information relating to a data transmission mode for use in communication with the counterpart communication device. The notification means notifies the counterpart communication device of the mode information after set-up processing for setting up multi-link communication between the communication device and the counterpart communication device is completed and before the multi-link communication is disconnected.

## Description

### TECHNICAL FIELD

The present invention relates to a technology for controlling a data transmission mode in wireless communication.

### BACKGROUND ART

The IEEE 802.11 series standard is known as the WLAN communication standard developed by the Institute of Electrical and Electronics Engineers (IEEE). Note that WLAN stands for Wireless Local Area Network. For example, the IEEE 802.11ax standard (hereafter referred to as 11ax) is defined as the latest standard currently in use. 11ax uses orthogonal frequency division multiple access (OFDMA) to allow high peak throughput of up to 9.6 gigabits per second (Gbps) and an improvement in the communication speed under congested conditions (PTL 1). To further improve throughput and frequency usage efficiency, development of the IEEE 802. 1 The standard (hereafter referred to as 11be standard) is also being considered. In the 11be standard, standardization of multi-link communication, in which one access point (AP) establishes multiple wireless links with one station (STA), is being considered.

In multi-link communication, an AP is referred to as a multi-link device (AP_MLD) and an STA is referred to as a Non-AP_MLD. In the 11be standard characterized by multi-link, multiple data transmission modes are specified for data communication between MLDs, which are multiple APs/STAs.

### CITATION LIST

### PATENT LITERATURE

PTL 1: Japanese Patent Laid-Open No. 2018-50133

### SUMMARY OF INVENTION

### TECHNICAL PROBLEM

However, in 11be, the method for setting a data transmission mode when connecting/establishing a wireless link is specified, but the method for changing the mode during the progress of data transmission after association is not specified. Therefore, when shifting (changing) the mode to a different data transmission mode, it is necessary to reconnect the wireless link and reconfigure the data transmission mode. In other words, it is not possible to promptly change the data transmission mode during the progress of data transmission.

The present invention has been made in view of the problem, and an object thereof is to provide a technology that enables a change in data transmission mode even during the progress of data transmission.

### SOLUTION TO PROBLEM

To solve the above-described problem, a communication device according to the present invention has the following configuration. That is, a communication device that performs wireless communication includes: notification means for notifying a counterpart communication device of mode information relating to a data transmission mode for use in communication with the counterpart communication device, wherein the notification means notifies the counterpart communication device of the mode information after set-up processing for setting up multi-link communication between the communication device and the counterpart communication device is completed and before the multi-link communication is disconnected.

### ADVANTAGEOUS EFFECTS OF INVENTION

According to the present invention, it is possible to provide a technology that enables a change in data transmission mode even during the progress of data transmission. Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram showing a configuration of a network.
FIG. 2 is a diagram showing a hardware configuration of a communication device.
FIG. 3 is a diagram showing a functional configuration of the communication device.
FIG. 4 is a flowchart showing processing on an Initiator side.
FIG. 5 is a flowchart showing processing on a Responder side.
FIG. 6 is a diagram showing an example of a MAC frame format.
FIG. 7 is a diagram showing an example of a HT Control field.
FIG. 8 is a diagram showing an example of an A-Control field.
FIG. 9 is a diagram showing an example of a Control List field.
FIG. 10 is a diagram showing an example of an OM Control Information subfield.
FIG. 11 is a diagram showing an example of an EHT_OM Control subfield.
FIG. 12 is a diagram illustrating a method for designating the number of reception streams.
FIG. 13 is a diagram illustrating a method for designating the number of transmission streams.
FIG. 14 is a diagram showing an example in which a reserved area in the EHT_OM Control field is used.
FIG. 15 is a diagram showing examples of the EHT_OM Control field and an unused area.
FIG. 16 is a diagram showing an example in which reserved areas and unused areas of the EHT_OM Control field are used.
FIG. 17 is a diagram illustrating frame exchange in an STR mode.
FIG. 18 is a diagram illustrating frame exchange in an EMLSR mode.
FIG. 19 is a diagram illustrating frame exchange in an EMLMR mode only on the DL side.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### [First Embodiment]

The following will describe, as a first embodiment of a communication device according to the present invention, an example of a communication device 102 that operates as an access point (AP) for a wireless LAN.

### <Device Configuration and Network Configuration>

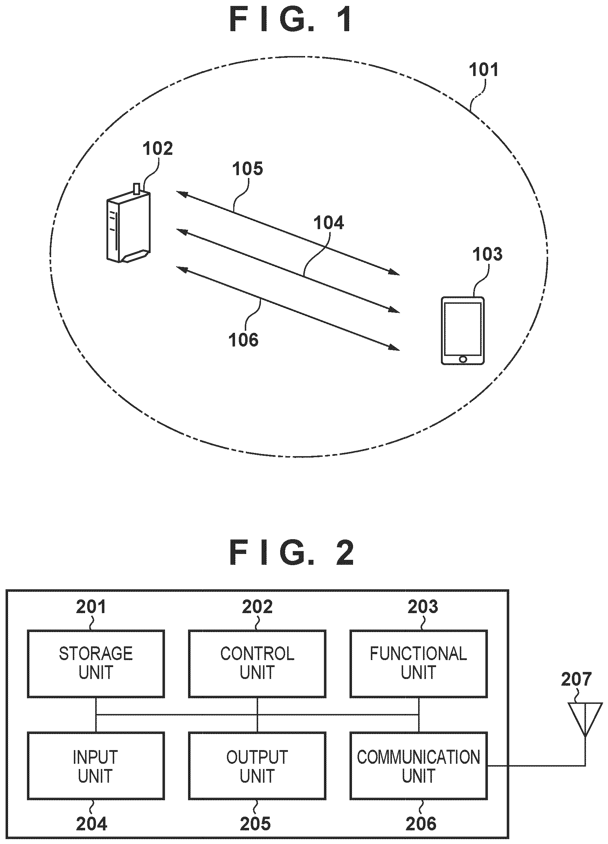

FIG. 1 is a diagram showing a configuration of a network including the communication device 102. As described above, the communication device 102 operates as an AP that has a function to establish a network 101. A communication device 103 operates as a station (STA) that has a function to participate the network 101 and also operates as a counterpart communication device with respect to the communication device 102. Note that the network 101 is a wireless network. Note that FIG. 1 shows a network constituted by a single AP and a single STA, but the numbers of APs and STAs are not limited to them.

In the present embodiment, when the communication device 102 establishes a plurality of networks, all the networks have the same BSSID. Note that BSSID stands for Basic Service Set Identifier and is an identifier for identifying a network. The communication device 102 also indicates a common SSID for all the networks. Note that SSID stands Service Set Identifier and is an identifier for identifying an access point. In the present embodiment, the communication device 102 uses a single SSID even when a plurality of connections are established.

The communication devices 102 and 103 support the 11be standard (referred to also as the EHT standard), and can execute wireless communication compatible with the 11be standard via the network 101. Note that EHT stands for Extremely (or Extreme) High Throughput. The communication devices can communicate with each other in frequency bands such as 2.4 GHz, 5 GHz, and 6 GHz bands. The frequency bands used by the communication devices are not limited to them, and a different frequency band such as, e.g., 60 GHz band may be used. The communication devices can also communicate with each other in bandwidths of 20 MHz, 40 MHz, 80 MHz, 160 MHz, and 320 MHz.

The communication devices 102 and 103 can execute multi-user (MU) communication that multiplexes signals of multiple users by performing orthogonal frequency division multiple access (OFDMA) communication compatible with the 11be standard. In OFDMA communication, one or more resource units (RUs) are allocated to each STA so as not to overlap with each other and the carrier wave allocated to the STA is configured to be orthogonal. Accordingly, an AP can communicate with the plurality of STAs in parallel.

Also, the communication devices 102 and 103 execute multi-link communication by establishing links via a plurality of frequency channels and performing communication. Here, frequency channels refer to frequency channels defined by the IEEE 802.11 series standard. In the IEEE 802.11 series standard, a plurality of frequency channels are defined for each of frequency bands of 2.4 GHz, 5 GHz, and 6 GHz bands. Also, in the IEEE 802.11 series standard, the bandwidth of the frequency channels is defined as 20 MHz. Note that a bandwidth of 40 MHz or greater may also be used in one frequency channel by bonding this frequency channel to an adjacent frequency channel.

For example, the communication device 102 can establish a first link 104 with the communication device 103 via a first frequency channel of 2.4 GHz band, and a second link 105 with the communication device 103 via a second frequency channel of 5 GHz band, and can communicate with the communication device 103 via the two links. In this case, the communication device 102 maintains, in parallel to the first link 104 via the first frequency channel, the second link 105 via the second frequency channel. By establishing links with the communication device 103 via a plurality of frequency channels in this way, the communication device 102 can improve the throughput in communication with the communication device 103.

Note that the communication devices 102 and 103 may also establish a plurality of links in different frequency bands in multi-link communication. For example, the communication devices 102 and 103 may also establish, in addition to the first link 104 in the 2.4 GHz band and the second link 105 in the 5 GHz band, a third link 106 in the 6 GHz band. Alternatively, links may be established via a plurality of different channels included in the same frequency band. For example, a first link 104 via 1 ch in the 2.4 GHz band and a second link 105 via 5 ch in the 2.4 GHz band may be established. Furthermore, links in the same frequency band and links in different frequency bands may also be present in a mixed manner. For example, the communication devices 102 and 103 may establish, in addition to the first link 104 via 1ch in the 2.4 GHz band and the second link 105 via 5 ch in the 2.4 GHz band, a third link 106 via 36 ch in the 5 GHz band. As a result of a plurality of connections with the communication device 103 in different frequency bands being established, even when a certain band is congested, the communication device 102 can communicate with the communication device 103 in another band, thereby making it possible to prevent a reduction in throughput in communication with the communication device 103.

In multi-link communication, a plurality of links established by the communication devices 102 and 103 need only have at least different frequency channels. Note that in multi-link communication, the channel spacing of the frequency channels of the plurality of links established by the communication devices 102 and 103 need only be at least greater than 20 MHz. Note that in the present embodiment, it is assumed that the communication devices 102 and 103 establish the first link 104 and the second link 105, but they may also establish three or more links.

When performing multi-link communication, the communication devices 102 and 103 divide one piece of data and transmit the divided pieces of data to the counterpart device via a plurality of links. Alternatively, by the communication devices 102 and 103 mutually transmitting the same data via a plurality of links, communication via one link may be used as backup communication for communication via the other link. Specifically, it is assumed that the communication device 102 transmits the same data to the communication device 103 via the first link via the first frequency channel and the second link via the second frequency channel. In this case, even if an error occurs in communication via, for example, the first link, the same data is transmitted via the second link, and thus the communication device 103 can receive the data transmitted from the communication device 102. Alternatively, the communication devices 102 and 103 may use different links depending on the types of frames and data to be communicated. For example, the communication device 102 may transmit a management frame via the first link and may transmit a data frame containing data via the second link.

Note that a management frame specifically refers to a Beacon frame, Probe_Request frame/Response frame, and Association_Request frame/Response frame. In addition to these frames, a Disassociation frame, an Authentication frame, a De-Authentication frame, and an Action frame are also referred to as management frames.

A Beacon frame is a frame that gives a notification of network information. Also, a Probe _Request frame is a frame that requests network information and a Probe_Response frame is a response thereto and is a frame that provides network information. An Association _Request frame is a frame that requests connection and an Association_Response frame is a response thereto and is a frame that indicates whether the connection is allowed or an error or the like has occurred.

A Disassociation frame is a frame that disconnects a connection. An Authentication frame is a frame that authenticates a counterpart device, and a De-Authentication frame is a frame that suspends the authentication of a counterpart device and disconnects the connection.

An Action frame is a frame that performs an additional function other than the above-described functions. The communication devices 102 and 103 transmit and receive management frames compatible with the IEEE 802.11 series standard. Alternatively, for example, when transmitting data relating to a captured image, the communication device 102 may transmit meta information such as date, parameters (aperture value and shutter speed) at the time of image capture, and positional information via the first link, and transmit pixel information via the second link.

The communication devices 102 and 103 may also be able to perform multiple-input and multiple-output (MIMO) communication. In this case, the communication devices 102 and 103 have a plurality of antennas, and one communication device transmits different signals from the respective antennas using the same frequency channel. On the reception side, the other communication device simultaneously receives all the signals given from multiple streams using the plurality of antennas, separates the signals of the respective streams, and decodes the signals. By executing MIMO communication in this manner, the communication devices 102 and 103 can communicate a larger amount of data at the same time than in a case where they do not execute MIMO communication. The communication devices 102 and 103 may also execute MIMO communication in some links when executing multi-link communication.

Note that the communication devices 102 and 103 are assumed to support the 11be standard, but in addition, they may support at least one of the standards (IEEE 802.11a/b/g/n/ac/ax) prior to the 11be standard. Also, in addition to the IEEE 802.11 series standard, the communication devices 102 and 103 may support other communication standard such as Bluetooth (registered trademark), NFC, UWB, Zigbee, and MBOA. Note that UWB stands for Ultra Wide Band, and MBOA stands for Multi Band OFDM Alliance. Note that OFDM stands for Orthogonal Frequency Division Multiplexing. Furthermore, NFC stands for Near Field Communication. UWB includes a wireless USB, a wireless 1394, Winet, and the like. The communication devices 102 and 103 may also support communication standards for wired communication such as a wired LAN.

Specific examples of the communication device 102 include a wireless LAN router and a PC, but the present invention is not limited to them. The communication device 102 may be any communication device as long as it can execute multi-link communication with another communication device. The communication device 102 may also be an information processing device such as a wireless chip capable of executing wireless communication compatible with the 11be standard. Note that the information processing device such as a wireless chip has an antenna for transmitting generated signals.

Specific examples of the communication device 103 include a camera, a tablet, a smartphone, a PC, a mobile phone, and a video camera, but the present invention is not limited to them. The communication device 103 may be any communication device as long as it can execute multi-link communication with another communication device. The communication device 103 may also be an information processing device such as a wireless chip capable of executing wireless communication compatible with the 11be standard.

FIG. 2 is a diagram showing a hardware configuration of the communication device 102. The communication device 102 includes a storage unit 201, a control unit 202, a functional unit 203, an input unit 204, an output unit 205, a communication unit 206, and an antenna 207. A plurality of antennas may be provided. Note that the communication device 103 has the same hardware configuration as that of the communication device 102.

The storage unit 201 is constituted by one or more memories such as a ROM and a RAM, and stores computer programs for performing later-described various operations, and various information such as communication parameters for wireless communication. ROM stands for Read Only Memory and RAM stands for Random Access Memory. Note that examples of the storage unit 201 may include, in addition to the memories such as the ROM and the RAM, a storage medium such as a flexible disk, a hard disk, an optical disk, a magnet-optical disk, a CD-ROM, a CD-R, a magnetic tape, a non-volatile memory card, and a DVD. The storage unit 201 may also be provided with a plurality of memories and the like.

The control unit 202 is constituted by, for example, one or more processors such as a CPU and an MPU, and executes a computer program stored in the storage unit 201 to control the entire communication device 102. Note that the control unit 202 may control the entire communication device 102 in cooperation with a computer program stored in the storage unit 201 and an operating system (OS). The control unit 202 also generates data and signals (wireless frames) to be transmitted in communication with other communication devices. Note that CPU stands for Central Processing Unit, and MPU stands for Micro Processing Unit. The control unit 202 may also include a plurality of processors such as multi-core processors and may control the entire communication device 102 using the plurality of processors.

The control unit 202 also controls the functional unit 203 to execute predetermined processing such as wireless communication, image capture, printing, and projection. The functional unit 203 is hardware used by the communication device 102 to perform predetermined processing.

The input unit 204 accepts various types of operations from a user. The output unit 205 performs various types of output to the user via a monitor screen or speakers. Here, output by the output unit 205 may be display on the monitor screen, audio output by the speakers, vibration output, and the like. Note that both the input unit 204 and the output unit 205 may be realized in a single module, such as a touch panel. The input unit 204 and the output unit 205 may be formed in one piece with the communication device 102 or may be separate units.

The communication unit 206 controls wireless communication compatible with the 11be standard. The communication unit 206 may also control wireless communication compatible with, in addition to the 11be standard, other IEEE 802.11 series standard, or may control wired communication such as a wired LAN. The communication unit 206 controls an antenna 207 to transmit and receive signals for wireless communication generated by the control unit 202. Note that when the communication device 102 supports, in addition to the 11be standard, NFC and Bluetooth standards and the like, the communication device 102 may control wireless communication compatible with these communication standards. Also, when the communication device 102 can execute wireless communication compatible with a plurality of communication standards, the communication device 102 may have configuration with separate communication units supporting the respective communication standards and separate antennas. The communication device 102 communicates data such as image data, document data, and video data with the communication device 103 via the communication unit 206. Note that the antenna 207 may be configured separately from the communication unit 206 or may be combined with the communication unit 206 into a single module.

The antenna 207 is an antenna capable of performing communication in 2.4 GHz, 5 GHz, and 6 GHz bands. In the present embodiment, the communication device 102 is assumed to include one antenna but may include different antennas for the frequency bands. When the communication device 102 includes a plurality of antennas, the communication device 102 may also include communication units 206 corresponding to the respective antennas.

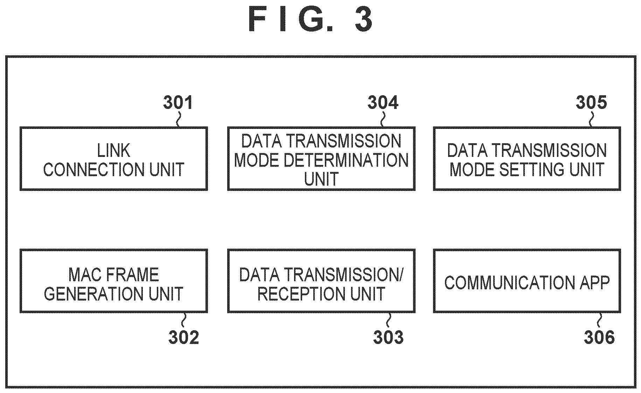

FIG. 3 is a diagram showing a functional configuration of the communication device 102. The communication device 102 is constituted by a link connection unit 301, a MAC frame generation unit 302, a data transmission/reception unit 303, a data transmission mode determination unit 304, a data transmission mode setting unit 305, and a communication application 306. Note that the functional configuration of the communication device 103 is the same.

The link connection unit 301 is a block that performs connection processing for establishing one or more links that the communication device 102 uses for data communication with the communication device 103. The connection processing specifically includes authentication processing, association processing, and 4-way-hand-shake (4WHS) processing. After completing the 4WHS processing, PTK, which is an encryption key for unicast communication, and GTK, which is an encryption key for broadcast/multicast communication, are generated by each of the communication device 102 and the communication device 103. When connecting to the communication device 103, connection to a plurality of links may be performed in advance, or during communication via a predetermined link, connection to another link may be performed later.

The communication application 306 determines and selects a data transmission mode according to the characteristics of an application to be used. As a result, if it is necessary to switch the current transmission mode, the communication application 306 requests the data transmission mode determination unit 304 to switch the data transmission mode. The request for switching the data transmission mode occurs due to a change in congestion state in the frequency band used for multi-link communication or in radio wave conditions, a power-saving operation of a battery-powered communication device, or the like. When restarting the data transmission, the data transmission mode determination unit 304 selects either a default data transmission mode or the previous transmission mode. The data transmission mode determination unit 304 also checks information elements included in a frame exchange packet with the counterpart communication device during the progress of data transmission, and determines whether or not to request a change in data transmission mode. The expression "during the progress of data transmission" means that it is in the State 3/4 state in the IEEE 802.11 standard. At this time, it may be determined whether or not it is reasonable to switch the data transmission mode according to the device capability in response to a request from the counterpart communication device. As a result of the determination as to the above-described change request, the data transmission mode setting unit 305 sets the data transmission mode to be implemented in the next and subsequent frame exchanges, by setting a data transmission mode in common between an uplink (UL) and a downlink (DL) or separate data transmission modes for the respective links. Here, UL means data transmission from the STA to the AP, and DL means data transmission from the AP to the STA.

The MAC frame generation unit 302 is a block that generates MAC frames included in various management frames such as Authentication Request and Association Request, and data frames, and the like. The data transmission/reception unit 303 transmits wireless frames including MAC frames generated by the MAC frame generation unit 302 and receives wireless frames from the counterpart communication device.

### <Description of Data Transmission Mode and Mode Designation Method>

In the 11be standard, multiple data transmission modes as described below are specified for data communication between MLDs, which are multiple APs/STAs.
- Non-simultaneous transmit and receive (NSTR): a transmission mode in which transmission and reception are performed via only one of multiple wireless links.
- Simultaneous transmit and receive (STR): a transmission mode in which simultaneous transmission and reception are performed using multiple wireless links.
- Enhanced multi-link single radio (EMLSR): a transmission mode in which an MLD selects one optimal frequency and uses a single frequency for multiple wireless links.
- Enhanced multi-link multi radio (EMLMR): a transmission mode in which multiple spatial streams are concentrated on one wireless link.

In the current 11ax standard, a function called operating mode indication (OMI) is standardized to change the number of transmission and reception streams, transmission and reception bandwidths, and the like after association as a measure for improving the throughput. This OMI is used between AP/STA through a QoS Data/Qos Null frame or Action frame that contains an OM Control Information subfield, which consists of data transmission information. Also, in the 11be standard currently being developed, realization of frequency band extension and the like by combining the OM Control Information subfield of the 11ax standard and the extreme high throughput operating mode (EHT_OM) unique to the 11be standard is being considered.

In the first embodiment, a portion of the EHT_OM field is further extended. Specifically, information elements are set in a reserved area 1104 of the EHT_OM field 1100 and an unused area 1501, which are described below. With this, the data transmission mode can be promptly switched during the progress of data transmission.

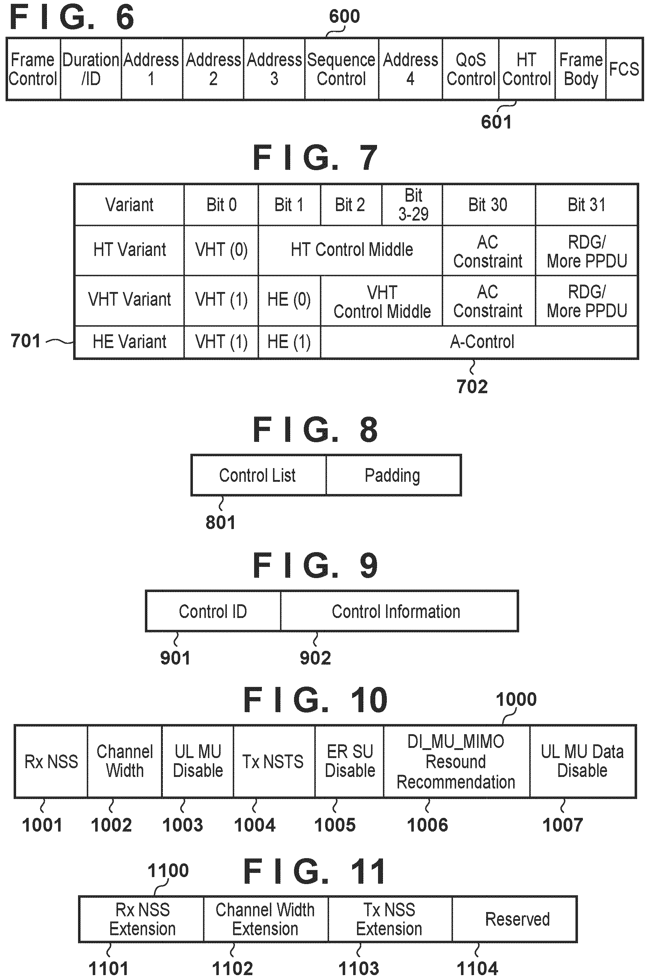

FIG. 6 is a diagram showing an example of a MAC frame format 600. The communication device 102 and the communication device 103 use an HT Control field 601 to give a notification of a data transmission mode.

FIG. 7 is a diagram showing an example of the HT control field 601. When giving a notification of the EHT_OM, the value of VHT (Very High Throughput) of Bit 0 and the value of HE (High Efficiency) of Bit 1 of a high efficiency (HE) Variant 701 are both set to "1". The HE Variant 701 includes an A-Control field 702.

FIG. 8 is a diagram showing an example of the A-Control field 702. The A-Control field 702 includes a Control List field 801.

FIG. 9 is a diagram showing an example of the Control List field 801. The Control List field 801 includes a Control ID field 901 and a Control Information field 902.

An example of the correspondence between the field value (4 bits) stored in the Control ID field 901 and typed of the corresponding Control Information field 902 (up to 26 bits) is shown in Table 1.

**[Table 1]**

| Field value | Control Information | Length (bits) |
|---|---|---|
| 0 | Triggered response scheduling (TRS) | 26 |
| 1 | Operating mode (OLM) | 12 |
| 2 | HE link adaptation (HLA) | 26 |
| 3 | Buffer status report (BSR) | 26 |
| 4 | UL power headroom (UPH) | 8 |
| 5 | Bandwidth query report (BQR) | 10 |
| 6 | Command and status (CAS) | 8 |
| 7 | EHT operating mode (EHT OM) | 6 |
| 8 | Single response scheduling (SRS) | 10 |
| 10 | AP assistance request (AAR) | 20 |
| 9, 11 to 14 | Reserved | |
| 15 | Ones need expansion surely (ONES) | 26 |

In the present embodiment, the operating mode (OLM) of the field value "1" in the Control List field 801 and the EHT operating mode (EHT_OM) of the field value "7" are used to give a notification of a data transmission mode.

FIG. 10 is a diagram showing an example of an OM Control Information subfield 1000. The OM Control Information subfield includes an RxNSS subfield 1001, a Channel Width subfield 1002, a UL MU Disable subfield 1003, a TxNSTS subfield 1004, an ER SU Disable subfield 1005, a DL MU MiMO Resound Recommendation subfield 1006, and a UL MU Data Disable subfield 1007.

FIG. 11 is a diagram showing an example of an EHT_OM Control subfield. The EHT_OM Control subfield includes, from the head, an RxNSS Extention subfield 1101, a Channel Width Extention subfield 1102, a TxNSS Extention subfield 1103, and a Reserved subfield (reserved area) 1104.

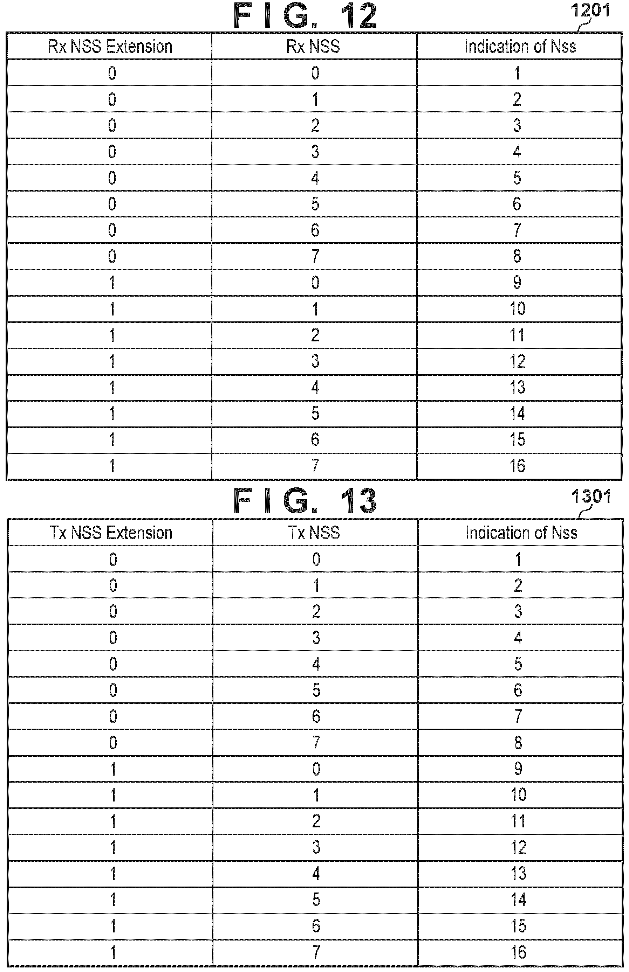

FIG. 12 is a diagram illustrating a method for designating the number of reception streams. Specifically, the figure illustrates an example of notification of the number of spatial streams for reception from the Initiator to the Responder.

For the number of spatial streams for reception, the RxNSS subfield 1001 in the OM Control Information subfield and the RxNSS Extention subfield 1101 in the EHT_OM Control subfield are used. Specifically, the number of spatial streams of the 11be is indicated by combining the setting values of the fields, and the content thereof is indicated by an Indication of Nss 1201.

FIG. 13 is a diagram illustrating a method for designating the number of transmission streams. Specifically, the figure illustrates an example of notification of the number of spatial streams for transmission from the Initiator to the Responder.

For the number of spatial streams for transmission, the TxNSS subfield 1004 in the OM Control Information subfield and the TxNSS Extention subfield 1103 in the EHT_OM Control subfield are used. Specifically, the number of spatial streams of the 11be is indicated by combining the setting values of the fields, and the content thereof is indicated by an Indication of Nss 1301.

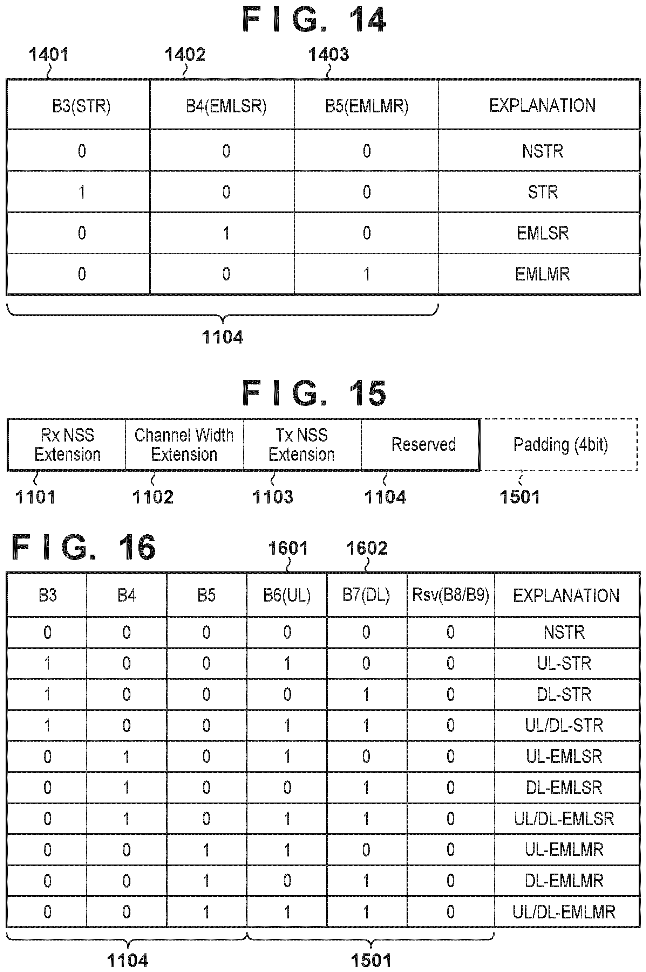

FIG. 15 is a diagram showing examples of an EHT_OM Control field and an unused area. Specifically, the figure shows an unused area 1501 (Padding of 4 bits) with which extension is possible when the OLM in the A-control field 702 and the EHT_OM control subfield 1100 are used.

To give a notification of a data transmission mode, the operating mode (OLM) of the field value "1" in the Control List field 801 and the EHT operating mode (EHT_OM) of the field value "7" are used. At this time, the number of bits in the unused area of the A-control field 702, whose maximum number of bits is 30 bits, is 4 bits (= 30 - 16 -10) since 16 bits (= 4 + 12) are used in the OLM and 10 bits (=4 + 6) are used in the EHT_OM.

FIG. 16 is a diagram showing an example where multiple bits in the Reserved subfield and the Padding of the EHT_OM Control field are used. Specifically, 5 bits in the A-control field (3 bits in the reserved area 1104 and 2 bits in the unused area 1501) are used. In other words, the bit sequence in the reserved area 1104 is extended by adding one or more bits in the unused area 1501 (4 bits). Here, an example is shown in which the first two bits (Bit 6 (B6) 1601 and Bit 7 (B7) 1602) are used and the remaining two bits are configured as the reserved area.

The Bit 6 (B6) 1601 indicates whether or not the data transmission mode regarding the wireless link in the uplink direction of packet data transmitted from the communication device 103 to the communication device 102 is supported. The Bit 7 (B7) 1602 indicates whether or not the data transmission mode regarding the wireless link in the downlink direction of packet data transmitted from the communication device 102 to the communication device 103 is supported. As an example, when "0", "0", "1", "0", and "1"are set in the bit fields of Bit 3 (B3) to Bit 7 (B7), it is notified that the data transmission mode is an EMLMR data transmission mode in the wireless link in the downlink direction (DL-EMLMR).

### < Apparatus Operation>

The following will describe processing performed by the communication device 102 and the communication device 103 when switching the data transmission mode from "NSTR" that is an initial multi-link communication setting to "STR", "EMLSR", and "EMLMR". The operation will be described in detail that is performed when, after the set-up processing for multi-link communication has been executed between the communication devices 102 and 103 with the data transmission mode set to NSTR, the communication device 102 operates as an Initiator and the communication device 103 operates as a Responder.

### <Example of Operation on Initiator Side>

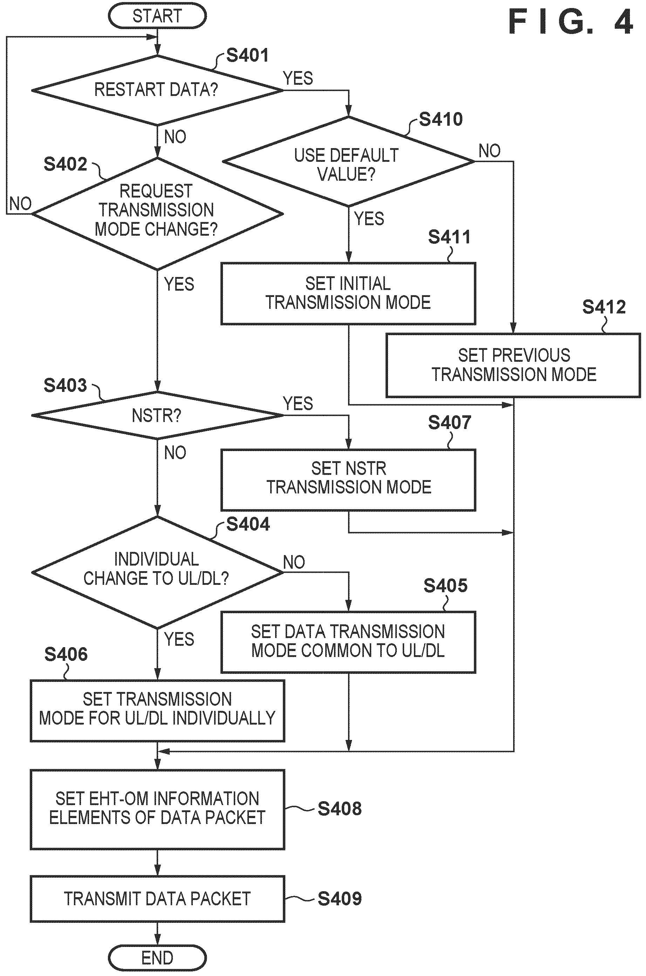

FIG. 4 is a flowchart showing processing on the Initiator side. Specifically, processing performed by the communication device 102 serving as a device (Initiator) that activates a notification of a change in the data transmission mode.

### <Case of Switching to Default (e.g., NSTR Mode)>

In step S401, the communication device 102 checks the past data transmission mode switching status when executing data transmission processing in response to a data transmission request from the communication application 306, for example. If the operation is to restart data transmission after the data transmission mode has been switched, the procedure moves to step S410.

In step S410, the communication device 102 determines whether or not to use a given default value (e.g., NSTR mode) set during the setup of the wireless link for the data transmission mode when performing restart. Here, it is determined to use the default value, the procedure moves to step S411.

In step S411, the communication device 102 reconfigures information associated with the NSTR data transmission mode to predetermined information elements (first reconfiguration mode). Then, the procedure moves to step S408. The predetermined information elements refer to the OM Control subfield 1000 and the EHT_OM Control subfield 1100, and the following will describe details of the predetermined information elements relating to switching to the NSTR mode.

The information element of the OM Control field 1000, namely, the RxNSS 1001, which indicates the number of spatial streams for reception, is set to "0", and the RxNSS Extention 1101 in the EHT_OM Control subfield 1100 is set to "0". Similarly, the TxNSS 1004, which indicates the number of spatial streams for transmission, is set to "0" and the TxNSS Extention 1103 in the EHT_OM Control subfield 1100 is set to "0". These information elements are interpreted such that in the communication device 103 on the Responder side, the number of spatial streams for reception (Indication of Nss count 1201) is 1 and the number of spatial streams for transmission (Indication of Nss count 1301) is 1.

In step S408, the communication device 102 sets information elements in the reserved area 1104 of the EHT_OM field 1100 and the unused area 1501. Specifically, as shown in FIG. 16, the values "0", "0", "0", "0", and "0" are set in the bit fields of Bit 3 (B3) to Bit 7 (B7).

In step S409, the communication device 102 transmits, to the communication device 103, a data packet containing the MAC frame 600 in which information elements relating to the data transmission mode are set.

### <Case where Mode (e.g., STR mode) of Previous Data Transmission is Continued>

In step S401, the communication device 102 determines that the operation is to restart data transmission after the data transmission mode has been switched, and the procedure moves to step S410.

In step S410, the communication device 102 determines whether or not to use a default (e.g., NSTR mode) set during the setup of the wireless link for the data transmission mode when performing restart. Here, it is determined to use the mode of the previous data transmission (e.g., STR mode in common between UL/DL), and the procedure moves to S412.

In step S412, the communication device 102 reconfigures information associated with the STR data transmission mode to predetermined information elements (second reconfiguration mode). Then, the procedure moves to step S408. The predetermined information elements refer to the OM Control subfield 1000 and the EHT_OM Control subfield 1100, and the following will describe details of the predetermined information elements relating to switching to the STR mode.

The information element of the OM Control field 1000, namely, the RxNSS 1001, which indicates the number of spatial streams for reception, is set to "0", and the RxNSS Extention 1101 in the EHT_OM Control subfield 1100 is set to "0". Similarly, the TxNSS 1004, which indicates the number of spatial streams for transmission, is set to "0" and the TxNSS Extention 1103 in the EHT_OM Control subfield 1100 is set to "0". These information elements are interpreted such that in the communication device 103 on the Responder side, the number of spatial streams for reception (Indication of Nss count 1201) is 1 and the number of spatial streams for transmission (Indication of Nss count 1301) is 1.

In step S408, the communication device 102 sets information elements in the reserved area 1104 of the EHT_OM field 1100 and the unused area 1501. Specifically, as shown in FIG. 16, the values "1", "0", "0", "1", and "1" are set in the bit fields of Bit 3 (B3) to Bit 7 (B7).

In step S409, the communication device 102 transmits, to the communication device 103, a data packet containing the MAC frame 600 in which information elements relating to the data transmission mode are set.

### <Case Where Switching of Data Transmission Mode Newly Occurs>

In step S401, the communication device 102 determines that it is before the execution of data transmission mode switching processing (the operation is not to restart data), and the procedure moves to step S402.

In step S402, the data transmission mode determination unit 304 of the communication device 102 checks whether or not a request for a change in data transmission mode has been given from the communication application 306. If no change request has been given from the communication application 306, the procedure moves to step S401. If such a request for a change in data transmission mode has been given, the procedure moved to step S403.

in step S403, the data transmission mode determination unit 304 determines, based on the currently used data transmission mode, the data transmission mode to be used thereafter by the communication device 102. If it is requested to switch the data transmission mode to NSTR, the procedure moves to step S407. If it is requested to switch the data transmission mode to a mode other than NSTR, the procedure moves to step S404.

In step S404, the data transmission mode determination unit 304 checks whether or not a setting change request has been given individually for UL/DL. If no setting change request has been given individually for UL/DL (a setting change request has been given in common between UL/DL), the procedure moves to step S405, and if a setting change request has been given individually for UL/DL, the procedure moves to step S406.

In step S405, the data transmission mode setting unit 305 sets data transmission mode information to predetermined information elements to apply the data transmission mode information to multi-link communication between the communication devices. Then, the procedure moves to step S408. The following will describe a case where the EMLSR mode is set in common between UL/DL in the respective subfields using the OM Control subfield 1000 and the EHT_OM Control subfield 1100, which are the predetermined information elements.

The information element of the OM Control field 1000, namely, the RxNSS 1001, which indicates the number of spatial streams for reception, is set to "0", and the RxNSS Extention 1101 in the EHT_OM Control subfield 1100 is set to "0". Similarly, the TxNSS 1004, which indicates the number of spatial streams for transmission, is set to "0" and the TxNSS Extention 1103 in the EHT_OM Control subfield 1100 is set to "0". These information elements are interpreted such that in the communication device 103 on the Responder side, the number of spatial streams for reception (Indication of Nss count 1201) is 1 and the number of spatial streams for transmission (Indication of Nss count 1301) is 1.

In step S406, if, for example, a change request is given for the DL side, the communication device 102 sets the EMLMR communication to the DL side, as information on the data transmission mode. Then, the procedure moves to step S408. The following will describe in detail setting information for the respective subfields using the OM Control subfield 1000 and the EHT_OM Control subfield 1100 when changing the data transmission mode at this time to EMLMR communication.

The information element of the OM Control field 1000, namely, the RxNSS 1001, which indicates the number of spatial streams for reception, is set to "1", and the RxNSS Extention 1101 in the EHT_OM Control subfield 1100 is set to "0". Similarly, the TxNSS 1004, which indicates the number of spatial streams for transmission, is set to "1" and the TxNSS Extention 1103 in the EHT_OM Control subfield 1100 is set to "0". These information elements are interpreted such that in the communication device 103 on the Responder side, the number of spatial streams for reception (Indication of Nss count 1201) and the number of spatial streams for transmission (Indication of Nss count 1301) are both up to 2.

In step S407, the data transmission mode setting unit 305 sets NSTR communication as information on the data transmission mode to be applied to a plurality of wireless links established by the communication device 102 and the communication device 103. The specific information element setting information is the same as in S411, and thus the description thereof is omitted.

In step S408, when the procedure comes from step S405, the communication device 102 sets information elements in the reserved area 1104 of the EHT_OM field 1100 and the unused area 1501. Specifically, as shown in FIG. 16, the values "0", "1", "0", "1", and "1" are set in the bit fields of Bit 3 (B3) to Bit 7 (B7).

On the other hand, when the procedure comes from step S406, the communication device 102 sets information elements in the EHT_OM field 1100 and the subsequent extended unused area 1501. Specifically, as shown in FIG. 16, the values "0", "0", "1", "0", and "1" are set in the bit fields of Bit 3 (B3) to Bit 7 (B7).

Note that the specific information element setting information when the procedure comes from step S407 is the same as that when the procedure comes from step S411, and thus the description thereof is omitted.

In step S409, the communication device 102 transmits, to the communication device 103, a data packet containing the MAC frame 600 in which information elements relating to the data transmission mode are set.

### <Example of Operation on Responder Side>

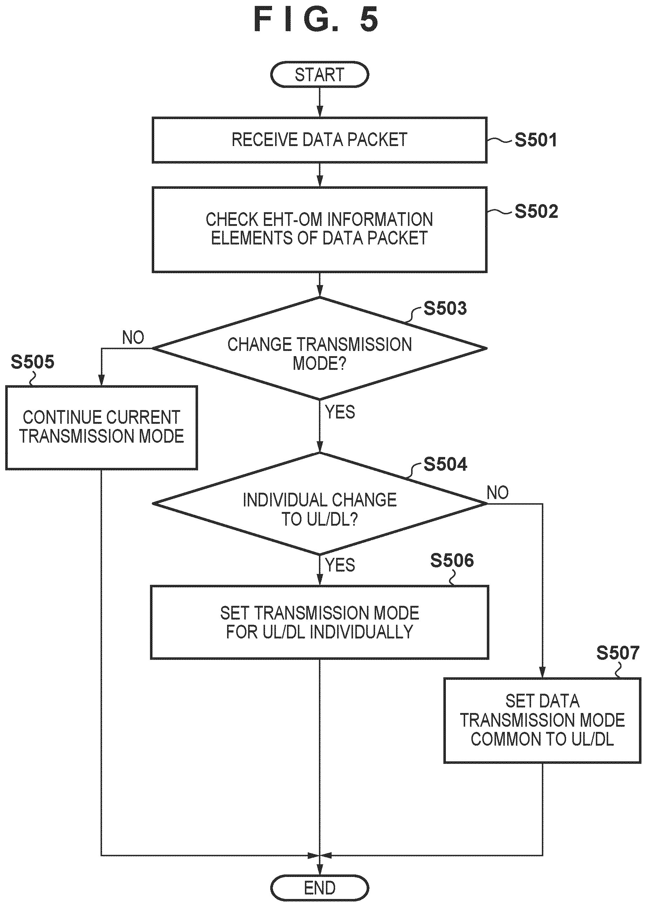

FIG. 5 is a flowchart showing processing on the Responder side. Specifically, processing performed by the communication device 103 serving as a device (Respondeor) that receives the notification of a change in data transmission mode. That is, the figure shows processing upon receiving a data packet containing the MAC frame 600 in which information elements relating to the data transmission mode are set.

In step S501, the communication device 103 receives a data packet from the communication device 102. In step S502, the communication device 103 checks information elements in the OM Control subfield 1000 and the EHT_OM Control subfield 1100 within the received MAC frame 600.

In step S503, the data transmission mode determination unit 304 of the communication device 103 checks whether or not the data transmission mode has been changed (switched). Here, if the information elements of the OM and the EHT_OM are not included, it is determined that the data transmission mode has not been changed, and the procedure moves to step S505. On the other hand, if the information elements of the OM and the EHT_OM are included, it is determined that the data transmission mode has been changed, and the procedure moves to step S504.

In step S504, the data transmission mode determination unit 304 executes processing for checking the setting information of the information elements in detail. Specifically, whether or not a change is requested individually for the UL/DL is checked. For example, if the bit information elements of Bit 3 (B3) to Bit 7 (B7) in the reserved area 1104 and the unused area 1501 are "1", "0", "0", "1", and "1", it is determined that the data transmission mode is a mode in common between the UL/DL (STR mode), and the procedure moves to step S507. Alternatively, if the bit information elements of Bit 3 (B3) to Bit 7 (B7) in the reserved area 1104 and the unused area 1501 are "0", "1", "0", "1", and "1", it is determined that the data transmission mode is a mode in common between the UL/DL (EMLSR mode), and the procedure moves to step S507. On the other hand, if the bit information elements of Bit 3 (B3) to Bit 7 (B7) in the reserved area 1104 and the unused area 1501 are "0", "0", "1", "0", and "1", it is determined that the data transmission mode is set individually for the UL/DL (EMLSR mode only on the DL side), and the procedure moves to step S506.

In step S505, the communication device 103 continues the current data transmission mode.

In step S506, the data transmission mode setting unit 305 sets the data transmission mode used in the data frame exchange with the communication device 102 to the EMLMR mode only on the DL side.

In step S507, the data transmission mode setting unit 305 sets the data transmission mode used in the data frame exchange with the communication device 102. In other words, the data transmission mode setting unit 305 sets the data transmission mode to the mode in common between the UL/DL (STR mode or EMLSR mode) determined in steps S503 and S504.

After any of steps S505 to S507, the communication device 103 (Non-AP_MLD) exchanges frames of data packets in the multi-link established with communication device 102 (AP_MLD).

### <Example of Operation after Switching Data Transmission Mode>

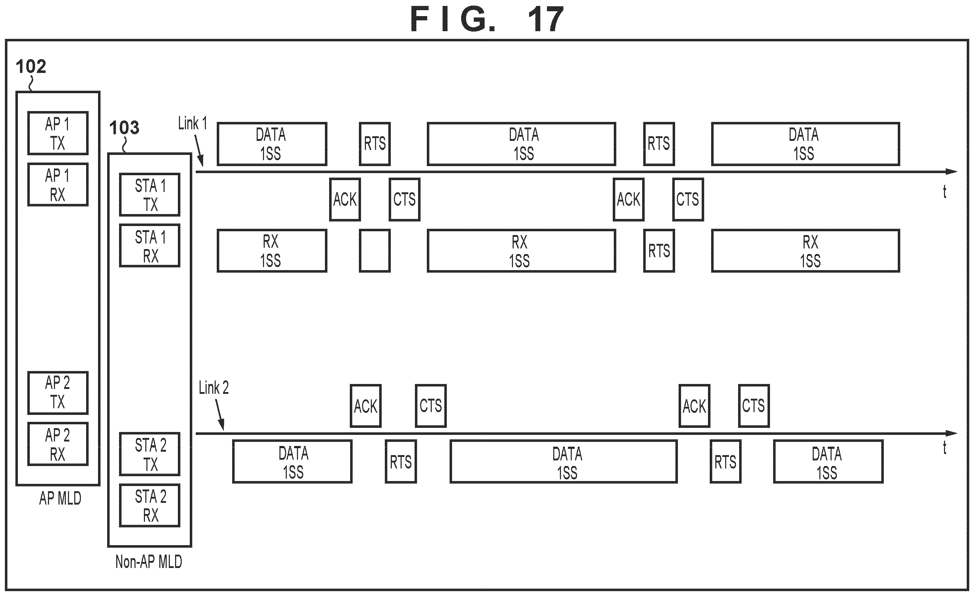

The following will describe communication between the communication device 102 and the communication device 103 after the switching of the data transmission mode with reference to FIGS. 17 to 19.

FIG. 17 is a diagram illustrating frame exchange in the STR mode. This figure illustrates, for example, the communication operation after switching the data transmission mode to the STR during multi-link data transmission established between the communication device 102 and the communication device 103 in "NSTR".

Specifically, the operation of simultaneous transmission and reception of data frames on the multiple wireless links, namely, the Link 1 and the Link 2 (having spatial streams for transmission and reception of 1).

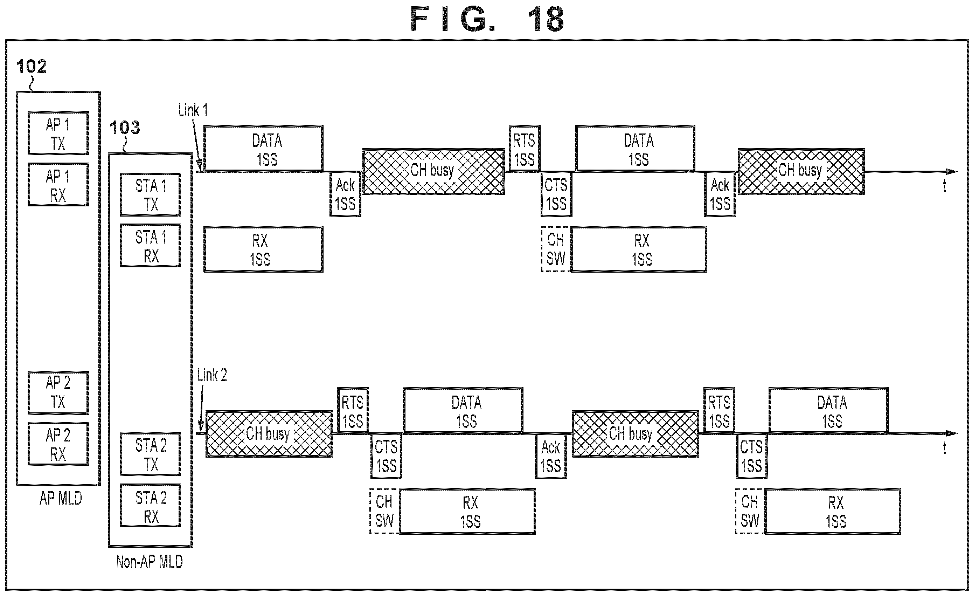

FIG. 18 is a diagram illustrating frame exchange in the EMLSR mode. This figure illustrates, for example, the communication operation after switching the data transmission mode to the EMLSR during multi-link data transmission established between the communication device 102 and the communication device 103 in "NSTR".

Specifically, the Non-AP_MLD sets 2 x 2 Tx/Rx modules to 1 × 1 for each channel frequency band (2.4/5 GHz) of different wireless links and starts monitoring incoming packets for the two channel frequency bands. The AP_MLD transmits, before the actual transmission of a data frame, a control frame (RTS or MU-RTS) to give a notification of which channel is to be used for data transmission on an idle channel of a preset channel. Upon receiving the control frame, the Non-AP_MLD responds with CTS and switches the corresponding wireless link to 2 x 2, and the AP_MLD switches one wireless link for use in frame exchange to 2 x 2 and transmits data following the CTS. In EMLSR communication, the above operation is repeated to select the optimal channel frequency band for frame exchange between the Non-AP_MLD and the AP_MLD to exchange data packets.

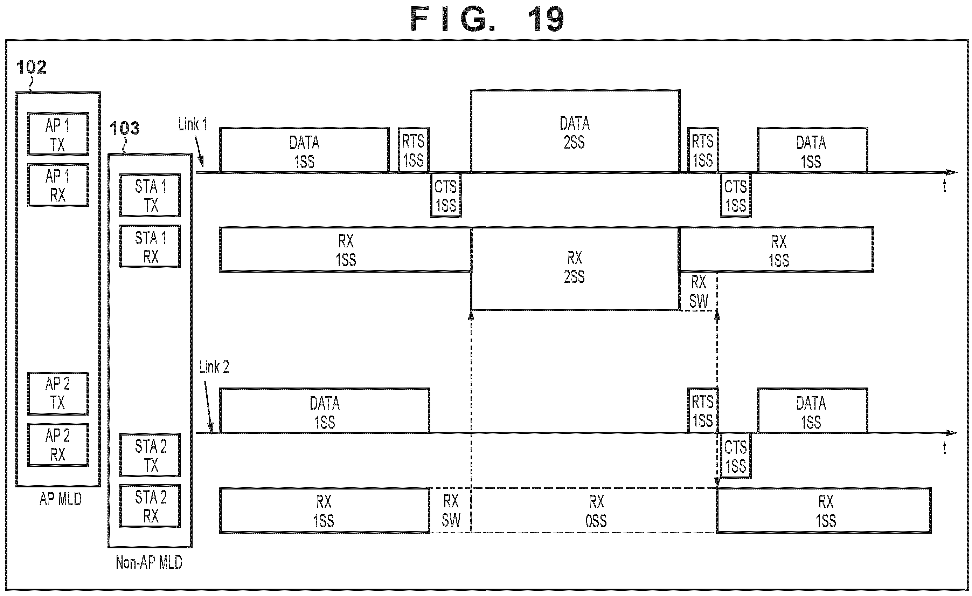

FIG. 19 is a diagram illustrating frame exchange in the EMLMR mode only on the DL side. This figure illustrates, for example, the communication operation after switching the data transmission mode on the DL side to the EMLMR during multi-link data transmission established between the communication device 102 and the communication device 103 in "NSTR".

Specifically, the figure shows a series of steps in which after switching the data transmission mode, the AP_MLD, namely, the communication device 102 transmits, to the Non-AP_MLD, namely, the communication device 103, a data frame with the spatial stream for transmission in the EMLMR mode on the Link 1 set to 2.

First, the AP_MLD transmits an RTS frame containing information necessary for an EMLMR operation. With this RTS frame, the Non-AP_MLD starts the EMLMR operation. If the Non-AP_MLD having received the RTS frame can perform the EMLMR operation, the Non-AP_MLD transmits a CTS frame as a response to the RTS frame to notify the AP of the fact that it can receive the data frame with the spatial stream of 2.

Alternatively, the Non-AP_MLD moves the receiving function provided on the Link 2 to the Link 1 and sets the number of spatial streams for reception on the Link 1 to 2 and the number of spatial streams for reception on the Link 2 to 0. After the completion of the transmission of the CTS frame on the Link 1, the Non-AP_MLD starts transmission with the number of spatial streams set to 2, so the moving (switching) of the receiving function is completed by then.

After having received the CTS frame, the AP_MLD transmits a data frame with the number of spatial streams set as 2. After the completion of the reception of the data frame with the number of spatial streams of 2, the Non-AP_MLD restores the receiving function concentrated on the Link 1 to the Link 2. As a result, the Non-AP_MLD returns to the state before the start of the frame exchange sequence.

As described above, according to the first embodiment, information elements in the reserved area 1104 of the EHT_OM field 1100 and the unused area 1501 are set. With this, even during the progress of data transmission, the data transmission mode can be promptly switched without performing reconnection processing.

For example, during the use of the STR or EMLSR data transmission mode, if the usage efficiency of the frequency band becomes poor and the user wants to expend to another frequency band, it is possible to switch to EMLMR without performing reconnection processing. Also, during the use of the EMLMR data transmission mode, if the usage efficiency of one frequency band becomes poor and the user wants to reduce the used frequency band, it is possible to switch to STR or EMLSR without performing reconnection processing.

In the above description, the switching of the data transmission mode from NSTR to STR/EMSMR/EMSMR has been described. However, the order of the modes/types of the modes can be set as appropriate. Also, the description above has been given assuming that the communication device 102 operating as an AP is an Initiator and the communication device 103 operating as a STA is a Responder, but the correspondence may be vice versa.

### [Modification]

In the foregoing first embodiment, a notification of a change in the data transmission mode is given by setting information elements in the reserved area 1104 and the unused area 1501 (FIG. 16). However, a notification of a change in the data transmission mode may be given by setting information elements in another field.

FIG. 14 is a diagram showing an example in which only the reserved area 1104 in the EHT_OM Control field is used. The reserved area 1104 is constituted by 3 Bits and contains bits that indicate, from the first bit, an STR data transmission mode 1401, an EMLSR data transmission mode 1402, and an EMLMR data transmission mode 1403. As an example, when "0", "1", and "0" are set in the bit fields of the Bit 3 (B3) to Bit 5 (B5), it indicates that the data transmission modes in bidirectional wireless links are EMLSR, and when all the bits are "0", it indicates that the data transmission modes are NSTR. In other words, in the modification, the data transmission mode is in common between the UL/DL, so that only three bits from Bit 3 (B3) to Bit 5 (B5) are sufficient. This eliminates the need to use the bit in the unused area 1501 and allows the unused area 1501 to be used for other usages.

### [Other Embodiments]

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2022-067820 filed April 15, 2022, which is hereby incorporated by reference herein.

## Claims

1. A communication device that performs wireless communication, **characterized by** comprising:
notification means for notifying a counterpart communication device of mode information relating to a data transmission mode for use in communication with the counterpart communication device,
wherein the notification means notifies the counterpart communication device of the mode information after set-up processing for setting up multi-link communication between the communication device and the counterpart communication device is completed and before the multi-link communication is disconnected.

2. The communication device according to claim 1,
**characterized in that** the communication device and the counterpart communication device perform wireless communication compatible with the IEEE 802.11 series standard, and
the notification means sets the mode information as multiple bits within an A-control field contained in an HT Control field of a MAC frame.

3. The communication device according to claim 2,
**characterized in that** the multiple bits include three bits in a Reserved subfield of an EHT_OM Control subfield contained in the A-control field.

4. The communication device according to claim 3,
**characterized in that** the multiple bits further include one or more bits in an unused area of the EHT_OM Control subfield contained in the A-control field.

5. The communication device according to any one of claims 2 to 4,
**characterized in that** the mode information contains information relating to one of data transmission modes NSTR, STR, EMLSR, and EMLMR defined by the IEEE 802.11be standard.

6. The communication device according to claim 5,
**characterized in that** the mode information contains information relating to respective data transmission modes for an uplink and a downlink.

7. The communication device according to any one of claims 1 to 6, **characterized by** further comprising:
reconfiguration means for reconfiguring a data transmission mode when restarting data transmission after interruption of data transmission,
wherein the reconfiguration means includes a first reconfiguration mode for reconfiguring a data transmission mode based on a given default, and a second reconfiguration mode for reconfiguring a data transmission mode used before the interruption.

8. The communication device according to any one of claims 1 to 7,
**characterized in that** the notification means notifies the counterpart communication device of the mode information in response to a change request for changing a data transmission mode used in communication with the counterpart communication device.

9. The communication device according to claim 8,
**characterized in that** the change request is given due to a change in congestion in a frequency band used for the multi-link communication, a change in radio wave conditions, and/or a power-saving operation of the communication device.

10. A method for controlling a communication device that performs wireless communication, **characterized by** comprising:
processing means for executing set-up processing for setting up multi-link communication with a counterpart communication device; and
notifying the counterpart communication device of mode information relating to a data transmission mode for use in communication with the counterpart communication device after the set-up processing executed by the processing means is completed and before the multi-link communication is disconnected.

11. A program for causing a computer with a communication unit configured to perform wireless communication to function as the communication device according to any one of claims 1 to 9.
